# EUROPEAN PATENT APPLICATION

(11) **EP 3 147 039 A1**
(43) Date of publication of application: **29.03.2017**
(21) Application number: 14893168.6
(22) Date of filing: 09.10.2014
(51) Int. Cl.: B08B 7/00, G02B 27/09, B23K 26/142

(54) **DEVICE FOR CLEANING COATING ON LITHIUM-ION BATTERY ELECTRODE SHEET**

(30) Priority: 30.05.2014 CN 201420283159 U
(71) Applicant: NingDe Amperex Technology Limited, Ningde City, Fujian 352100 (CN)
(72) Inventor: ZHANG, Bin, Ningde Fujian 352100 (CN); ZHAO, Yi, Ningde Fujian 352100 (CN); HE, Ping, Ningde Fujian 352100 (CN); FANG, Hongxin, Ningde Fujian 352100 (CN); CHENG, Wenqiang, Ningde Fujian 352100 (CN); GENG, Jibin, Ningde Fujian 352100 (CN)
(74) Representative: Manitz, Finsterwald & Partner GbR
(86) International application number: PCT/CN2014/088164
(87) International publication number: WO 2015/180361

(57) **Abstract**

A device for removing a coating layer of an electrode plate of a lithium-ion battery comprises a conveying system (1) for conveying an electrode plate (6) and a laser system (2), the laser system comprises at least one laser emitting head (21) for emitting a laser beam and projecting the laser beam onto the electrode plate and a beam shaping mechanism (22) for homogenizing energy of the laser beam emitted from the laser emitting head, the laser emitting head and the beam shaping mechanism are electrically connected. In the device for removing the coating layer of the electrode plate of the lithium-ion battery, the beam shaping mechanism is provided, energy of the laser beam can be homogenized, neither damages a foil of the electrode plate so that welding quality of the electrode tab is promoted, nor results in remaining of the coating layer so that the removing quality is promoted, and the energy can be effectively utilized, thereby realizing maximum utilization of the energy of the laser.

## Description

### FIELD OF THE INVENTION

The invention relates to a technical field of device for manufacturing an electrode plate of a battery, particularly relates to a device for removing a coating layer of an electrode plate of a lithium-ion battery.

### BACKGROUND OF THE INVENTION

Lithium-ion battery has been widely concerned due to its advantages, such as high energy density, environment-friendly and the like, and has been widely applied in electronic devices, such as a mobile phone, a laptop and the like, and with technical development of electric vehicle, application of the lithium-ion battery in the field of electric vehicle is becoming more and more concerned.

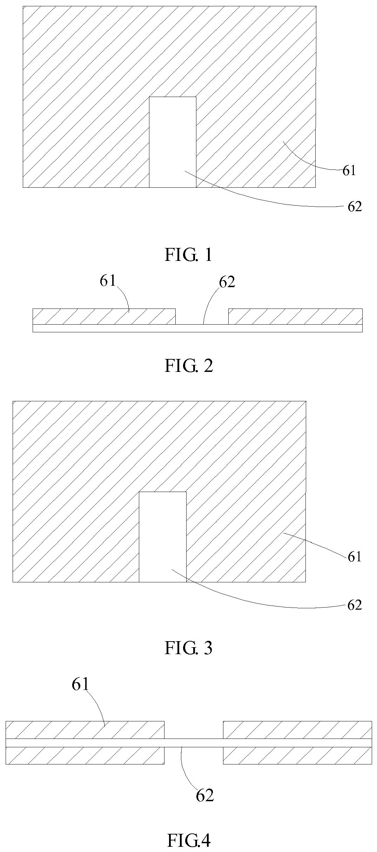

Although demand for the lithium-ion battery from market is becoming more and more large, manufacturing speed of the lithium-ion battery having high energy density is hard to promote. This is because: in processes for manufacturing the lithium-ion battery, one important process which affects the manufacturing speed of the lithium-ion battery is a process for welding an electrode tab onto an electrode plate of the lithium-ion battery, as shown in FIG. 1 and FIG. 2, a coating layer 61 of an electrode plate 6 is continuous due to coating, in order to realize that an electrode tab is welded onto the electrode plate 6, firstly the coating layer 61 of the electrode plate 6 within a region 62 where the electrode tab will be welded (or this region is referred to as a region where the coating layer will be removed) is removed. And, in some special process of manufacturing the battery, it further requires to perform fine removing on the coating layer 61 with respect to different shapes at different positions of the electrode plate 6 of the battery. For example, as shown in FIG. 3 and FIG.4, it sometimes further requires to remove the coating layer 61 within the region 62 where the electrode tab will be welded at a corresponding position of an upper surface of the electrode plate 6 and remove the coating layer 61 within the region 62 where the electrode tab will be welded at a corresponding position of a lower surface of the electrode plate 6.

At present, commonly used removing methods comprise a mechanical scrape removing method and a chemical removing method, however these two removing methods have many problems: the mechanical removing is difficult to ensure cleanness of removing, particularly for a thin electrode plate, the mechanical removing further easily scratches the electrode plate; the chemical removing damages the environment to a certain extent, has disadvantages, such as poor working environment, low manufacturing efficiency and the like. In view of deficiencies existing in the above two methods, United States patent No. US 8,309,880 B2 discloses a device for removing a coating layer of an electrode plate with laser removing, and resolves the problems existing in the above two removing methods.

However, the device in this patent has the following deficiencies.

Firstly, the principle of laser removing is: under the action of laser, the coating layer absorbs a certain energy, particles of the coating layer are gasified, sublimed and vibrate and the like, so that the coating layer is removed. Because an energy distribution of a laser beam emitted from a laser device generally is Gaussian distribution, the laser beam has high energy in the middle and low energy at an edge under such a distribution. However, a certain range of energy is required to remove the coating layer of the electrode plate, so in such a laser beam whose energy is distributed as Gaussian distribution, relative high energy in the middle easily damages a foil (because a current collector of the electrode plate of the battery generally is a Cu foil and an Al foil, a thickness of the current collector is several microns to ten microns, such a high energy part quite easily penetrates Al/Cu foil), thereby affecting removing quality and welding quality of the electrode tab; but energy at the edge is lower than the energy required on removing, so the coating layer remains at a position corresponding to the energy at the edge, thereby also affecting the removing quality. At the same time, these high energy and low energy make energy utilization rate quite low because they cannot be effectively utilized.

Secondly, while the coating layer of the electrode plate is removed by laser, under the action of laser, the coating layer is heated, stress in the coating layer will be changed, which in turn results in deformation of the electrode plate; after the coating layer is removed, because residual stress is released, the electrode plate will also generate a slight deformation, which in turn affects later welding of the electrode tab.

Thirdly, in this patent, an inert gas is blown toward the region of the electrode plate where the coating layer has been removed with a nozzle, so as to realize cleaning and cooling of the electrode plate. However, particles within the region where the coating layer has been removed cannot be completely got rid of by such a manner, so that the particles will remain around the region where the coating layer has been removed, and affect property of the battery.

Fourthly, during removing, the laser will ceaselessly accelerate and decelerate at a corner of the region where the coating will be removed, which thus results in removing quality unstable upon moving of a laser head, a removing size not precise, so such a manner is hard to realize mass production.

### SUMMARY OF THE INVENTION

In view of the deficiencies existing in the prior art, an object of the invention is to provide a device for removing a coating layer of an electrode plate of a lithium-ion battery, which neither damages a foil of an electrode plate as a current collector so that welding quality of an electrode tab is promoted, nor results in remaining of a coating layer so that the removing quality is promoted, and both high energy and low energy in a laser beam can be effectively utilized, thereby promoting energy utilization rate.

In order to realize above object, the invention employs the following technical solution: a device for removing a coating layer of an electrode plate of a lithium-ion battery comprises a conveying system for conveying an electrode plate and a laser system, the laser system comprises at least one laser emitting head for emitting a laser beam and projecting the laser beam onto the electrode plate, the laser system at least further comprises a beam shaping mechanism for homogenizing energy of the laser beam emitted from the laser emitting head, the laser emitting head and the beam shaping mechanism are electrically connected, and the beam shaping mechanism is provided between the laser emitting head and the electrode plate.

As an improvement on the device for removing the coating layer of the electrode plate of the lithium-ion battery, the laser system further comprises a galvanometer scanning mechanism, the galvanometer scanning mechanism is electrically connected with the beam shaping mechanism, and the galvanometer scanning mechanism is provided between the beam shaping mechanism and the electrode plate, a focusing lens is further provided between the galvanometer scanning mechanism and the electrode plate.

As an improvement on the device for removing the coating layer of the electrode plate of the lithium-ion battery, the device for removing the coating layer of the electrode plate of the lithium-ion battery further comprises an auxiliary platform, the auxiliary platform is provided below the laser system, and the auxiliary platform comprises an adsorption cooling mechanism for fixing and cooling the electrode plate, the adsorption cooling mechanism and the laser emitting head are respectively provided at two sides of the electrode plate.

As an improvement on the device for removing the coating layer of the electrode plate of the lithium-ion battery, the auxiliary platform further comprises a dust collecting mechanism for gettering particles generated from the coating layer during laser removing, the dust collecting mechanism is provided between the electrode plate and the laser system.

As an improvement on the device for removing the coating layer of the electrode plate of the lithium-ion battery, the removing device further comprises a central control system, the central control system is respectively electrically connected with the conveying system, the laser system and the auxiliary platform.

As an improvement on the device for removing the coating layer of the electrode plate of the lithium-ion battery, the conveying system at least comprises one unwinding roller, one winding roller and a plurality of fixing rollers; one end of the electrode plate is connected to the unwinding roller, the other end of the electrode plate sequentially passes through the plurality of the fixing rollers and then is wound around the winding roller.

As an improvement on the device for removing the coating layer of the electrode plate of the lithium-ion battery, the conveying system at least further comprises one sensor for positioning a region of the electrode plate where the coating layer will be removed, the sensor is provided between the unwinding roller and the auxiliary platform, an electrode plate deviation rectifying mechanism is further provided between the unwinding roller and the sensor.

As an improvement on the device for removing the coating layer of the electrode plate of the lithium-ion battery, the conveying system at least further comprises one dust sticking mechanism for getting rid of particles and impurities remaining on the electrode plate, the dust sticking mechanism is provided between the winding roller and the auxiliary platform.

As an improvement on the device for removing the coating layer of the electrode plate of the lithium-ion battery, the device for removing the coating layer of the electrode plate of the lithium-ion battery further comprises a quality monitoring system for monitoring a removing quality of the region of the electrode plate where the coating layer has been removed, the quality monitoring system is provided between the dust sticking mechanism and the winding roller, and the quality monitoring system is electrically connected with the central control system.

As an improvement on the device for removing the coating layer of the electrode plate of the lithium-ion battery, the conveying system at least further comprises a guiding roller which can make an upper surface and a lower surface of the electrode plate upside down, the laser system and the auxiliary platform each are provided as two in number, and one laser system corresponds to the upper surface of the electrode plate, the other laser system corresponds to the lower surface of the electrode plate.

In comparison with the prior art, in the invention, the beam shaping mechanism is provided between the laser emitting head and the electrode plate, energy of the laser beam can be homogenized, neither damages a foil of the electrode plate as a current collector so that welding quality of the electrode tab is promoted, nor results in remaining of the coating layer so that the removing quality is promoted, and both high energy and low energy in the laser beam can be effectively utilized, thereby realizing maximum utilization of the energy of the laser, in turn promoting energy utilization rate, promoting the removing efficiency and the removing quality. Moreover, the beam shaping mechanism may further convert the spot to a laser beam having a different size and a different shape, for example a rectangle, a square, a circle, an ellipse, a trapezoid and the like. When the energy is constant, depending on difficulty of removing dirt or particle, an outputted laser beam may have a different energy density simply by adjusting an area of the spot, so that the outputted laser beam has great removing capability.

### BRIEF DESCRIPTION OF THE DRAWINGS

FIG. 1 is a top view schematically illustrating an electrode plate with a coating layer removed.
FIG. 2 is a cross sectional view schematically illustrating the electrode plate with the coating layer removed.
FIG. 3 is a top view schematically illustrating another electrode plate with coating layers removed.
FIG. 4 is a cross sectional view schematically illustrating the another electrode plate with the coating layers removed.
FIG. 5 is a structural schematic view of a first embodiment of the invention.
FIG. 6 is a structural schematic view of a second embodiment of the invention.

Reference numerals are represented as follows:
- 1: conveying system
- 11: unwinding roller
- 12: winding roller
- 13: fixing roller
- 14: sensor
- 140: first sensor
- 140': second sensor
- 15: dust sticking mechanism
- 16: electrode plate deviation rectifying mechanism
- 17: guiding roller
- 2: laser system
- 20: first laser system
- 20': second laser system
- 21: laser emitting head
- 22: beam shaping mechanism
- 23: galvanometer scanning mechanism
- 24: focusing lens
- 3: auxiliary platform
- 30: first auxiliary platform
- 30': second auxiliary platform
- 31: adsorption cooling mechanism
- 32: dust collecting mechanism
- 4: central control system
- 5: quality monitoring system
- 6: electrode plate
- 61: coating layer
- 62: region where electrode tab will be welded

### DETAILED DESCRIPTION OF THE INVENTION

Hereinafter the invention and beneficial effects thereof will be described in detail in combination with figures and embodiments, however implementing modes of the invention are not limited to those.

### FIRST EMBODIMENT

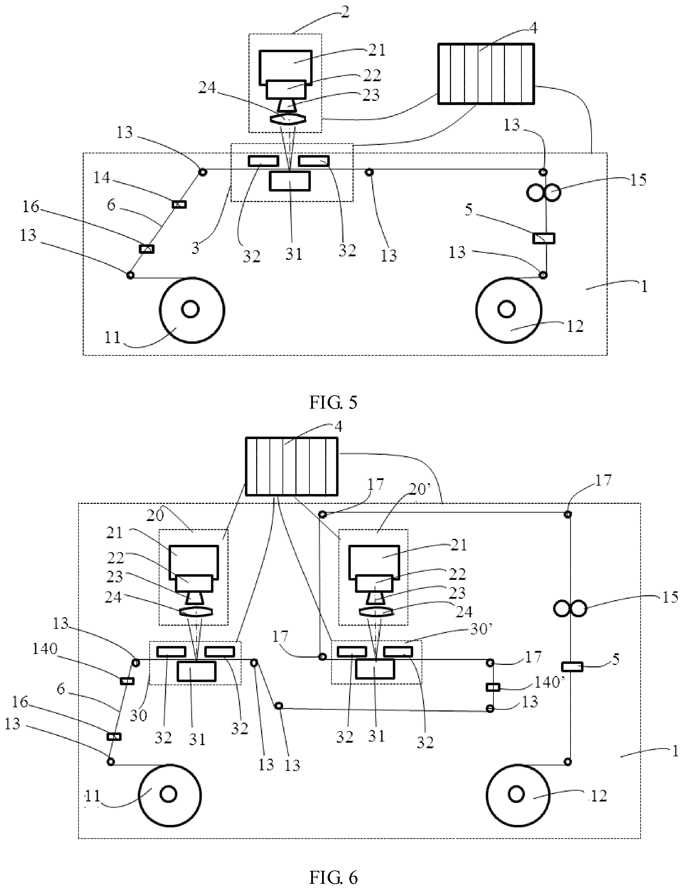

As shown in FIG. 5, the present embodiment provides a device for removing a coating layer of an electrode plate of a lithium-ion battery which comprises a conveying system 1 for conveying an electrode plate 6 and a laser system 2, the laser system 2 comprises at least one laser emitting head 21 for emitting a laser beam and projecting the laser beam onto the electrode plate 6 and a beam shaping mechanism 22 for homogenizing energy of the laser beam emitted from the laser emitting head 21, the laser emitting head 21 and the beam shaping mechanism 22 are electrically connected, and the beam shaping mechanism 22 is provided between the laser emitting head 21 and the electrode plate 6.

In practical operation, depending on difference in material to be removed (for the electrode plate of the lithium-ion battery, material to be removed is materials contained in a positive active material layer and materials contained in a negative active material layer), the laser emitting head 21 having a different wavelength and belonging to a different series may be used.

The beam shaping mechanism 22 can homogenize energy of the laser beam, promote removing quality, so that the energy of the laser beam can be used to maximum extent so as to increase removing efficiency. The beam shaping mechanism 22 may further convert a spot to a laser beam having a different size and a different shape, for example a rectangle, a square, a circle, an ellipse, a trapezoid and the like. When the energy is constant, depending on difficulty of removing dirt or particle, an outputted laser beam may have a different energy density simply by adjusting an area of the spot, so that the outputted laser beam has great removing capability.

The laser system 2 further comprises a galvanometer scanning mechanism 23, the galvanometer scanning mechanism 23 is electrically connected with the beam shaping mechanism 22, and the galvanometer scanning mechanism 23 is provided between the beam shaping mechanism 22 and the electrode plate 6, a focusing lens 24 is further provided between the galvanometer scanning mechanism 23 and the electrode plate 6. The galvanometer scanning mechanism 23 brings the following advantages: the galvanometer scanning mechanism 23 has relative high flexibility in removing pattern, can reach a high scanning speed, allows speed to be stable, has relative high resolution ratio with respect to movement, can allow positioning to be more precisely, can perform fine removing, promote precision in removing size and stability, promote removing quality. Specifically, because during removing, the laser beam needs to ceaselessly accelerate and decelerate at a corner of a region where the coating will be removed, a speed of movement of the laser beam is relative high during removing, the galvanometer scanning mechanism 23 can rapidly and accurately realize to position the movement of the laser beam, which can promote the region where the coating layer has been removed in size precision, positioning precision, removing quality and stability, but a laser system with a fixing laser emitting head cannot attain such a speed and precision.

The device for removing the coating layer of the electrode plate of the lithium-ion battery further comprises an auxiliary platform 3, the auxiliary platform 3 is provided below the laser system 1, and the auxiliary platform 3 comprises an adsorption cooling mechanism 31 for fixing and cooling the electrode plate 6, the adsorption cooling mechanism 31 and the laser emitting head 21 are respectively provided at two sides of the electrode plate 6.

Because there is residual stress in the interior of the coating layer of the electrode plate 6, after the coating layer of the electrode plate 6 within the region where an electrode tab will be welded is removed, stress is released to result in deformation of the electrode plate 6, on the other hand, laser is a high energy beam, the electrode plate 6 is heated and deformed to some extent during removing. In order to reduce deformation of the electrode plate 6 during removing, it is required to adsorb and cool the electrode plate 6, so as to allow heat to be dissipated out in time.

In the present embodiment, the adsorption cooling mechanism 31 is provided as a vacuum platform, and the vacuum platform is provided with a cooling pipeline therein, during laser removing, the electrode plate 6 is adsorbed on the vacuum platform so as to prevent the electrode plate 6 from being deformed, the cooling pipeline may absorb heat generated during removing.

The auxiliary platform 3 further comprises a dust collecting mechanism 32 for gettering particles generated from the coating layer during laser removing, the dust collecting mechanism 32 is provided between the electrode plate 6 and the laser system 2 (specifically between the electrode plate 6 and the focusing lens 24). In the present embodiment, the dust collecting mechanism 32 is provided as a downdraught dust collecting mechanism 32 having a certain negative pressure, and further comprises a particle discharging pipeline. During laser removing, the coating layer of the electrode plate 6 is removed, under the action of the downdraught dust collecting mechanism 32 having the constant negative pressure, the generated particles enter into the particle discharging pipeline of the dust collecting mechanism 32, which thus may ensure the particles not to remain on the electrode plate 6, prevent the particles from affecting the property of the battery, at the same time further can prevent the particles from polluting the environment.

The device for removing the coating layer of the electrode plate of the lithium-ion battery further comprises a central control system 4, the central control system 4 is respectively electrically connected with the conveying system 1, the laser system 2 and the auxiliary platform 3. The central control system 4 controls automatic winding and unwinding of the electrode plate 6, a traveling speed of the electrode plate 6, positioning of a removing position, a turn-on time of the laser beam and the like.

The conveying system 1 at least comprises one unwinding roller 11, one winding roller 12 and a plurality of fixing rollers 13; one end of the electrode plate 6 is connected to the unwinding roller 11, the other end of the electrode plate 6 sequentially passes through the plurality of fixing rollers13 and is wound around the winding roller 12. In the present embodiment, the fixing roller 13 is provided as five in number, and two fixing rollers 13 of the five fixing rollers 13 are respectively provided at two sides of the auxiliary platform 3 for fixing a segment of the electrode plate 6 containing the region where the coating layer will be removed.

The conveying system 1 at least further comprises one sensor 14 for positioning the region of the electrode plate where the coating layer will be removed and one dust sticking mechanism 15 for getting rid of the particles and impurities remaining on the electrode plate 6, the sensor 14 is provided between the unwinding roller 11 and the auxiliary platform 3, the dust sticking mechanism 15 is provided between the winding roller 12 and the auxiliary platform 3. In the present embodiment, the dust sticking mechanism 15 is provided as a dust sticking roller, when the coating layer within the region of the electrode plate 6 where the coating layer will be removed has been removed, the electrode plate 6 passes through the dust sticking roller, so that pollutants on the electrode plate 6, such as particles and the like, can be further got rid of. An electrode plate deviation rectifying mechanism 16 is further provided between the unwinding roller 11 and the sensor 14 for rectifying a conveying position of the electrode plate 6.

The device for removing the coating layer of the electrode plate of the lithium-ion battery further comprises a quality monitoring system 5 for monitoring a removing quality of the region of the electrode plate where the coating layer has been removed, the quality monitoring system 5 is provided between the dust sticking mechanism 15 and the winding roller 12. The quality monitoring system 5 is electrically connected with the central control system 4, the quality monitoring system 5 monitors removing effect of the region of the electrode plate 6 where the coating layer has been removed, and feedbacks the monitoring information to the central control system 4 in time.

Among the other three fixing rollers 13 of the five fixing rollers 13, one fixing roller 13 is provided between the unwinding roller 11 and the electrode plate deviation rectifying mechanism 16, one fixing roller 13 is provided between the winding roller 12 and the quality monitoring system 5, one fixing roller 13 is provided between the dust sticking mechanism 15 and the fixing roller 13 which is positioned at one side of the auxiliary platform 3.

In practical operation, firstly, the electrode plate 6 is fixed on the unwinding roller 11, and then an end of the electrode plate 6 sequentially passes through one fixing roller 13, the electrode plate deviation rectifying mechanism 16, one fixing roller 13, the adsorption cooling mechanism 31, one fixing roller 13, one fixing roller 13, the dust sticking mechanism 15, one fixing roller 13 and then is wound around the winding roller 12; depending on different material of an active material layer of the electrode plate, the laser emitting head 21 having a suitable wavelength is selected.

And then, the central control system 4 is turned on, the following parameters in the central control system 4 are adjusted: the traveling speed of the electrode plate 6, setting of the removing position, the turn-on time of the laser beam and the like.

Next, under the winding action of the winding roller 12, the electrode plate 6 travels toward the winding roller 12 at the traveling speed set in the central control system 4, during traveling, the deviation rectifying mechanism 16 may rectify the conveying position of the electrode plate 6, and the sensor 14 may position the region of the electrode plate 6 where the coating layer will be removed, when the electrode plate 6 reaches the set removing position, traveling of the electrode plate 6 is stopped, and then the laser emitting head 21 emits a laser beam, energy distribution of the laser beam is homogenized after the laser beam passes through the beam shaping mechanism 22, based on a shape and a size of the region where the coating layer will have been removed, the beam shaping mechanism 22 is adjusted so as to make the spot of the beam shaping mechanism 22 converted to the laser beam with a desired size and a desired shape; and then the laser beam passes through the galvanometer scanning mechanism 23 and the focusing lens 24 and is properly positioned onto the region of the electrode plate 6 where the coating layer will be removed, and performs a coating layer removing operation.

During removing, the electrode plate 6 is adsorbed on the vacuum platform, so as to prevent the electrode plate 6 from being deformed, and the cooling pipeline may absorb heat generated during removing. At the same time, under the action of the downdraught dust collecting mechanism 32 having the certain negative pressure, particles generated during removing enter into the particle discharging pipeline of the dust collecting mechanism 32, so as to ensure the particles will not remain on the electrode plate 6, prevent the particles from affecting the property of the battery, at the same time further prevent the particles from polluting the environment.

And then, the central control system 4 controls the electrode plate 6 to allow traveling of the electrode plate 6 to go on, the region of the electrode plate 6 where the coating layer has been removed passes through the dust sticking mechanism 15, so as to further get rid of pollutants, such as particles and the like, on the electrode plate 6; the region of the electrode plate 6 where the coating layer has been removed next reaches below the quality monitoring system 5, the quality monitoring system 5 monitors removing effect of the region of the electrode plate 6 where the coating layer has been removed during removing, and feedbacks monitoring information to the central control system 4 in time. If the removing effect is unsatisfactory, it may perform a next removing process as the above or perform manual removing.

Finally, the electrode plate 6 is totally wound around the winding roller 12 under the winding action of the winding roller 12, so that the coating layer removing operation performed on the electrode plate 6 is completed.

The present embodiment may used to only perform the coating layer removing operation on the coating layer at only one side (an upper surface or a lower surface) of the electrode plate 6, the result of the electrode plate 6 with the coating layer removed is illustrated in FIG. 1 and FIG. 2. The present embodiment may be also used to perform the coating layer removing operations respectively on the two coating layers respectively at two sides (the upper surface and the lower surface) of the electrode plate 6, the result of the electrode plate 6 with the coating layers removed is illustrated in FIG. 3 and FIG. 4, however the previous coating layer removing operation will be performed twice.

In conclusion, the invention has the following advantages.

Firstly, in the invention, the beam shaping mechanism 22 is provided between the laser emitting head 21 and the electrode plate 6, energy of the laser beam can be homogenized, neither damages a foil of the electrode plate 6 as a current collector so that welding quality of the electrode tab is promoted, nor results in remaining of the coating layer so that the removing quality is promoted, and both high energy and low energy in the laser beam can be effectively utilized, thereby realizing maximum utilization of the energy of the laser, in turn promoting energy utilization rate, promoting the removing efficiency and the removing quality. Moreover, the beam shaping mechanism 22 may further convert the spot to a laser beam having a different size and a different shape, for example a rectangle, a square, a circle, an ellipse, a trapezoid and the like. When the energy is constant, depending on difficulty of removing dirt or particle, an outputted laser beam may have a different energy density simply by adjusting an area of the spot, so that the outputted laser beam has great removing capability.

Secondly, in the invention, the adsorption cooling mechanism 31 is provided, thereby avoiding deformation of the electrode plate 6 due to reasons, such as residual stress exists in the interior of the coating layer of the electrode plate 6, the electrode plate 6 is heated during laser removing and the like.

Thirdly, in the invention, the dust collecting mechanism 32 and the dust sticking mechanism 15 may relatively completely get rid of particles within the region of the electrode plate 6 where the coating layer has been removed, thereby avoiding particles remaining around the region of the electrode plate 6 where the coating layer has been removed to affect the property of the battery, and improving working environment of removing.

Fourthly, in the invention, the galvanometer scanning mechanism 23 is provided, the galvanometer scanning mechanism 23 can reach a high scanning speed, allows speed to be stable, has relative high resolution ratio with respect to movement, can allow positioning to be more precisely, can perform fine removing, promotes precision in removing size and stability, promote removing quality. Therefore, the invention can be applied for mass production in industry with high quality and high speed.

### SECOND EMBODIMENT

A difference of the present embodiment from the first embodiment lies in that a device for removing a coating layer of an electrode plate of a lithium-ion battery provided by the present embodiment can perform coating layer removing operations on two coating layers respectively at two sides (the upper surface and the lower surface) of the electrode plate 6, which can be realized by only one removing process.

In structure, as shown in FIG. 6, differences of the present embodiment from the first embodiment lie in: the conveying system 1 at least further comprises a guiding roller 17 which can make the upper surface and the lower surface of the electrode plate 6 upside down; the laser system and the auxiliary platform each are provided as two in number, they are electrically connected to the central control system 5 and hereinafter are referred to as a first laser system 20 and a second laser system 20' and a first auxiliary platform 30 and a second auxiliary platform 30', and the first laser system 20 corresponds to the upper surface of the electrode plate 6, the second laser system 20' corresponds to the lower surface of the electrode plate 6. The sensor is provided as two in number, they are hereinafter referred to as a first sensor 140 and a second sensor 140', the first sensor 140 is provided between the electrode plate deviation rectifying mechanism 16 and the first auxiliary platform 30, the second sensor 140' is provided between the first auxiliary platform 30 and the second auxiliary platform 30'.

In the present embodiment, the guiding roller 17 is provided as four in number, the fixing roller 13 is provided as four in number, specifically, two guiding rollers 17 are respectively provided at a left side and a right side of the second auxiliary platform 30' for making the electrode plate 6 upside down for the first time, the other two guiding rollers 17 are provided between the second auxiliary platform 30' and the dust sticking mechanism 15 for making the electrode plate 6 upside down for the second time so as to facilitate winding.

Among the six fixing rollers 13, one fixing roller 13 is provided between the unwinding roller 11 and the electrode plate deviation rectifying mechanism 16, one fixing roller 13 is provided between the first sensor 130 and the first auxiliary platform 30, three fixing rollers 13 are provided between the first auxiliary platform 30 and the second sensor 140', and one fixing roller 13 is provided between the winding roller 12 and the quality monitoring system 5.

Other features of the present embodiment are the same as those of the first embodiment, and so the detailed description is omitted.

In practical operation, firstly, the electrode plate 6 is fixed on the unwinding roller 11, and then an end of the electrode plate 6 sequentially passes through one fixing roller 13, the electrode plate deviation rectifying mechanism 16, one fixing roller 13, the adsorption cooling mechanism 31 of the first auxiliary platform 30, three fixing rollers 13, one guiding roller 17, the adsorption cooling mechanism 31 of the second auxiliary platform 30', three guiding rollers 17, the dust sticking mechanism 15, one fixing roller 13 and then is wound around the winding roller 12; depending on different material of an active material layer of the electrode plate, the laser emitting head 21 having a suitable wavelength is selected.

And then, the central control system 4 is turned on, the following parameters in the central control system 4 are adjusted: the traveling speed of the electrode plate 6, setting of the removing positions, the turn-on time of the laser beam and the like.

Next, under the winding action of the winding roller 12, the electrode plate 6 travels toward the winding roller 12 at the traveling speed set in the central control system 4, during traveling, the deviation rectifying mechanism 16 may rectify the conveying position of the electrode plate 6, the first sensor 140 may position the region where the coating layer will be removed at the upper surface of the electrode plate 6, the second sensor 140' may position the region where the coating layer will be removed at the lower surface of the electrode plate 6, when the electrode plate 6 reaches the set removing position, traveling of the electrode plate 6 is stopped, and then the laser emitting head 21 emits a laser beam, energy distribution of the laser beam is homogenized after the laser beam passes through the beam shaping mechanism 22, based on a shape and a size of the region where the coating layer will have been removed, the beam shaping mechanism 22 is adjusted so as to make the spot of the beam shaping mechanism 22 converted to the laser beam with a desired size and a desired shape; and then the laser beam passes through the galvanometer scanning mechanism 23 and the focusing lens 24 and is properly positioned onto the region of the electrode plate 6 where the coating layer will be removed, and performs a coating layer removing operation.

And then, the central control system 4 may firstly turn on the first laser system 20 to perform removing at the upper surface of the electrode plate 6, and then the central control system 4 controls the electrode plate 6 to allow traveling of the electrode plate 6 to go on, the central control system 4 then turns on the second laser system 20' to perform removing at the lower surface of the electrode plate 6; the central control system 4 may also firstly turn on the second laser system 20' so as to perform removing at the lower surface of the electrode plate 6, and then the central control system 4 controls the electrode plate 6 to allow traveling of the electrode plate 6 to go on, the central control system 4 then turns on the first laser system 20 to perform removing at the upper surface of the electrode plate 6; or the central control system 4 turns on the first laser system 20 and the second laser system 20' at the same time to perform removing at the upper surface of the electrode plate 6 and perform removing at the lower surface of the electrode plate 6 at the same time.

And then, after the removing has been completed, the region of the electrode plate 6 where the coating layer has been removed passes through the dust sticking mechanism 15, so as to further get rid of pollutants, such as particles and the like, on the electrode plate 6; the region of the electrode plate 6 where the coating layer has been removed next reaches below the quality monitoring system 5, the quality monitoring system 5 monitors removing effect of the region of the electrode plate 6 where the coating layer has been removed during removing, and feedbacks monitoring information to the central control system 4 in time. If the removing effect is unsatisfactory, it may perform a next removing process as the above or perform manual removing.

Finally, the electrode plate 6 is totally wound around the winding roller 12 under the winding action of the winding roller 12, so that the coating layer removing operations performed on the electrode plate 6 are completed.

The result of the electrode plate 6 with the coating layers removed is illustrated in FIG. 3 and FIG. 4, of course, the region where the coating layer will be removed at the upper surface of the electrode plate 6 and the region where the coating layer will be removed at the lower surface of the electrode plate 6 may be not symmetric about a plane where the current collector is present and acted as a symmetric plane.

Based on the disclosure and teaching from the above contents, a person skilled in the art can further make changes and modifications to the above embodiments. Therefore, the invention is not limited to the above specific embodiments, any obvious improvements, substitutions or variations made by the person skilled in the art on the basis of the invention belong to the protective scope of the invention. Moreover, although some specific terminologies are used in the invention, these terminologies are only for convenient explanation, but are not used to limit the invention.

## Claims

1. A device for removing a coating layer of an electrode plate of a lithium-ion battery, comprising a conveying system for conveying an electrode plate and a laser system, the laser system comprising at least one laser emitting head for emitting a laser beam and projecting the laser beam onto the electrode plate, wherein the laser system at least further comprises a beam shaping mechanism for homogenizing energy of the laser beam emitted from the laser emitting head, the laser emitting head and the beam shaping mechanism are electrically connected, and the beam shaping mechanism is provided between the laser emitting head and the electrode plate.

2. The device for removing the coating layer of the electrode plate of the lithium-ion battery according to Claim 1, wherein the laser system further comprises a galvanometer scanning mechanism, the galvanometer scanning mechanism is electrically connected with the beam shaping mechanism, and the galvanometer scanning mechanism is provided between the beam shaping mechanism and the electrode plate, a focusing lens is further provided between the galvanometer scanning mechanism and the electrode plate.

3. The device for removing the coating layer of the electrode plate of the lithium-ion battery according to Claim 1, wherein the device for removing the coating layer of the electrode plate of the lithium-ion battery further comprises an auxiliary platform, the auxiliary platform is provided below the laser system, and the auxiliary platform comprises an adsorption cooling mechanism for fixing and cooling the electrode plate, the adsorption cooling mechanism and the laser emitting head are respectively provided at two sides of the electrode plate.

4. The device for removing the coating layer of the electrode plate of the lithium-ion battery according to Claim 3, wherein the auxiliary platform further comprises a dust collecting mechanism for gettering particles generated from the coating layer during laser removing, the dust collecting mechanism is provided between the electrode plate and the laser system.

5. The device for removing the coating layer of the electrode plate of the lithium-ion battery according to Claim 4, wherein the removing device further comprises a central control system, the central control system is respectively electrically connected with the conveying system, the laser system and the auxiliary platform.

6. The device for removing the coating layer of the electrode plate of the lithium-ion battery according to Claim 5, wherein the conveying system at least comprises one unwinding roller, one winding roller and a plurality of fixing rollers; one end of the electrode plate is connected to the unwinding roller, the other end of the electrode plate sequentially passes through the plurality of the fixing rollers and then is wound around the winding roller.

7. The device for removing the coating layer of the electrode plate of the lithium-ion battery according to Claim 6, wherein the conveying system at least further comprises one sensor for positioning a region of the electrode plate where the coating layer will be removed, the sensor is provided between the unwinding roller and the auxiliary platform, an electrode plate deviation rectifying mechanism is further provided between the unwinding roller and the sensor.

8. The device for removing the coating layer of the electrode plate of the lithium-ion battery according to Claim 6, wherein the conveying system at least further comprises one dust sticking mechanism for getting rid of particles and impurities remaining on the electrode plate, the dust sticking mechanism is provided between the winding roller and the auxiliary platform.

9. The device for removing the coating layer of the electrode plate of the lithium-ion battery according to Claim 8, wherein the device for removing the coating layer of the electrode plate of the lithium-ion battery further comprises a quality monitoring system for monitoring a removing quality of the region of the electrode plate where the coating layer has been removed, the quality monitoring system is provided between the dust sticking mechanism and the winding roller, and the quality monitoring system is electrically connected with the central control system.

10. The device for removing the coating layer of the electrode plate of the lithium-ion battery according to Claim 6, wherein the conveying system at least further comprises a guiding roller which can make an upper surface and a lower surface of the electrode plate upside down, the laser system and the auxiliary platform each are provided as two in number, and one laser system corresponds to the upper surface of the electrode plate, the other laser system corresponds to the lower surface of the electrode plate.
